Europäisches Patentamt

European Patent Office

Office européen des brevets

(19)

(11) **EP 1 609 581 A2**

(12) **EUROPÄISCHE PATENTANMELDUNG**

(43) Veröffentlichungstag:
28.12.2005 Patentblatt 2005/52

(51) Int Cl.⁷: **B29C 47/92**

(21) Anmeldenummer: 05450107.7

(22) Anmeldetag: **16.06.2005**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **25.06.2004 AT 10892004**

(71) Anmelder: **Technoplast Kunststofftechnik Gesellschaft m.b.H.**
**4563 Micheldorf (AT)**

(72) Erfinder:
• **Schwaiger, Meinhard**
  **4040 Linz (AT)**
• **Verniest, Hugo**
  **8730 Beernem (BE)**

(74) Vertreter: **Babeluk, Michael**
**Patentanwalt,**
**Mariahilfer Gürtel 39/17**
**1150 Wien (AT)**

(54) **Verfahren zur Herstellung von Profilen aus Thermoplastischem Kunststoff**

(57) Die Erfindung betrifft ein Verfahren und die dazu erforderlichen Einrichtungen zur automatisierten Prozess- und Qualitätsüberwachung einer Extrusionsanlage und einer integrierten Prozessregelung zur rechtzeitigen Korrektur von Verfahrensparametern aufgrund von Eigenschaftsschwankungen im Rohmaterial oder Parameterschwankungen der Extrusionsanlage zur Sicherstellung einer gleichbleibenden Qualität des erzeugten Profils.

Fig. 2

EP 1 609 581 A2

Printed by Jouve, 75001 PARIS (FR)

**Beschreibung**

Die Erfindung betrifft ein Verfahren und die dazu erforderlichen Einrichtungen zur vollautomatischen Prozess- und Qualitätsüberwachung einer Extrusionsanlage und einer integrierten Prozessregelung zur rechtzeitigen Korrektur von Verfahrensparametern aufgrund von Eigenschaftsschwankungen im Rohmaterial oder Parameterschwankungen der Extrusionsanlage.

Es sind vielfach Anstrengungen unternommen worden, den Extrusionsprozess zu überwachen und eine gleichbleibende Qualität des hergestellten Profils zu gewährleisten. Ein ähnlich funktionsfähiges Verfahren wie im Spritzgießprozess ist für den Extrusionsprozess bislang nicht verfügbar. Die gegenständliche Erfindung beschreibt ein Verfahren und die dazu erforderlichen Einrichtungen, die eine Überwachung des Produktionsprozesses und der Qualität des produzierten Profils einerseits und die automatisierte Prozessregelung andererseits ermöglichen.

Kunststoffprofile aus thermoplastischen Kunststoffen (hier vorzugsweise aus PVC) werden im sogenannten Extrusionsverfahren als endlose Profilstangen hergestellt. Derartige Kunststoffprofile werden z.B. für die Herstellung von Kunststofffenstern verwendet. Gerade an die Qualität von im Extrusionsverfahren hergestellten Profilen, die für die Herstellung von Kunststofffenstern verwendet werden, sind die Anforderungen besonders hoch. So sind einerseits sehr enge MaßToleranzen einzuhalten und gleichbleibende optische Eigenschaften, wie z.B. gleichmäßiger Glanz über lange Produktionsperioden zu gewährleisten. Dies kann nur sichergestellt werden, wenn die Produktionsanlagen und Werkzeuge in einem optimalen Zustand und sorgfältig auf das zu verarbeitende Ausgangsmaterial abgestimmt sind. In einem eigenen Prozessabschnitt wird das Extrusionswerkzeug auf das zu verarbeitende Material mit dem im Produktionsprozess verwendeten Extruder abgestimmt. Dieser Vorgang wird einmalig in der Lebensgeschichte eines Extrusionswerkzeuges vorgenommen und wird mit der Freigabe zur Produktion abgeschlossen. Während der eigentlichen Nutzungsphase des Extrusionswerkzeuges muss der Produktionsprozess stabil und die Prozessparameter in sehr engen Grenzen (Betriebszustand) gehalten werden, damit ein Profil in gleichbleibender Qualität erzeugt werden kann. Es ist jedoch eine bekannte Tatsache, dass im laufenden Produktionsbetrieb Schwankungen im Rohmaterial unvermeidbar sind. Diese Schwankungen im Rohmaterial können jedoch die Qualität des Erzeugnisses oder die erforderlichen Prozessparameter beeinflussen.

Eine Grundvoraussetzung für eine gleichbleibende Qualität des extrudierten Profils aus thermoplastischem Kunststoff ist jedoch die gleichbleibende rheologische Eigenschaft der Schmelze, die vom Extruder in das Werkzeug geführt wird. Um diese Schmelze-Eigenschaften zu beschreiben bedarf es der Erfassung und Verarbeitung rheologischer Kenngrößen.

Dem Stand der Technik entsprechend werden zur Überwachung des Betriebszustandes des Extruders während der Produktion in einem zwischen dem Extruder und dem Werkzeug angeordneten Adapter der Massedruck (Schmelzedruck am Ausgang aus dem Extruder) mittels Drucksensor und die Massetemperatur (Schmelzetemperatur) mittels Thermofühler (Temperatursensor) gemessen und aufgezeichnet. Dieser Betriebszustand ist Material- und Werkzeugabhängig. Mit den beiden gemessenen Parametern Massedruck und Massetemperatur ist jedoch die Schmelzeeigenschaft aus rheologischer Sicht nicht beschreibbar.

Zur Bestimmung der rheologischen Eigenschaften der Schmelze sind vielfach Anstrengungen unternommen worden, wobei für den gegenständlichen Anwendungsfall die Erfassung der rheologischen Eigenschaften der Kunststoffschmelze unter Produktionsbedingungen unter Einbeziehung der Produktionsmaschine von Bedeutung ist.

In dem Fachartikel "Sensorentwicklung und Automatisierungstendenzen bei der Kunststoffaufbereitung" (H.-G. Fritz; S. Ultsch), Kunststoffe, Carl Hanser Verlag, München, Bd. 81, Nr. 1, 1991 ist ein Rheometersystem zum Erfassen rheologischer Stoffwertfunktionen dargestellt und beschrieben. Die dargestellten Rheometersysteme basieren auf der kontinuierlichen Probenentnahme während des Produktionsprozesses an nur einer Stelle des Schmelzeflusses im Extruder und der Förderung der Schmelze zum Rheometer bzw. die Rückförderung zum Extruder mittels Zahnradpumpe. Derartige Systeme sind jedoch im Falle der PVC-Extrusion ungeeignet, da jede zusätzliche Einbringung von Scherenergie (z.B. aufgrund der Förderung von Schmelze mittels der Zahnradpumpe) die rheologischen Eigenschaften der Schmelze verändert. Bei Nichtrückführung des abgezweigten Schmelzestromes ist ein permanenter Materialverlust gegeben.

Die WO 96/14930 (HIBRIGHT HOLDINGS LTD; Fleming Donald; Addleman Robert Leslie), 23. Mai 1996 offenbart eine Prozessüberwachung mittels Bestimmung rheologischer Eigenschaften von Kunststoffschmelzen in einem Extruder, derart, dass während der Messungen Schmelzematerial entnommen und in einer separaten Messvorrichtung die rheologischen Eigenschaften bestimmt werden. Dieses System ist im Falle der PVC-Verarbeitung nicht anwendbar.

In dem Fachartikel "Neues Konzept zur On-line-Rheometrie in Echtzeit" (A. Göttfert), Kunststoffe 81, Carl Hanser Verlag, München, Nummer 1, 1991, ist ein On-line-Messverfahren offenbart, zur Bestimmung rheologischer Kenngrößen von Kunststoffschmelzen. Bei diesem Verfahren wird ein Schmelzestrom vom Extruder abgezweigt, mittels einer Zahnradpumpe zur eigentlichen Messeinrichtung gefördert und gemessen. Nachteilig sind der permanente Materialverlust und die Beeinflussung der rheologischen Eigenschaften der Schmelze durch die Zahnradpumpenförderung, sodass dieses System für die PVC-Verarbeitung nicht anwendbar ist.

Die DE 197 41 674 A1 (HAAKE GmbH), 25. März 1999, offenbart ein Verfahren zur Bestimmung der rheologischen Eigenschaften einer Kunststoffschmelze (Mischung) in einem Extruder, wobei ein Schmelzestrom in einen Messkanal abgezweigt wird und mittels Druck- und Temperatursensoren die rheologischen Eigenschaften bestimmt werden. Nachteilig ist bei diesem System die Ausbildung des Messkanals im Extruderzylinder, weil der Extruderzylinder über seine Länge ein unterschiedliches Temperaturprofil aufweist und die rheologischen Eigenschaften einer Kunststoffschmelze von dieser Temperaturinhomogenität beeinflusst werden, sodass verfälschte rheologische Eigenschaften ermittelt werden.

Die EP 0 899 556 A (GENERAL ELECTRIC), 3. März 1999, offenbart ein Online-Rheometer auf der Basis der Abzweigung eines Schmelzestromes für die Bestimmung der rheologischen Eigenschaften. Nachteilig ist der permanente Materialverlust während der Produktion.

Die EP 0 347 055 A2 (RHEOMETRICS INC.), 20. Dezember 1989, offenbart ein Online Rheometer mit einer Schmelzeabzweigung aus dem Extruder und Schmelzeförderung zur Messeinrichtung mittels Zahnradpumpe. Nachteilig ist die Förderung des Schmelzestroms zur Messeinrichtung mit einer Zahnradpumpe, weshalb im Falle der PVC-Extrusion unbrauchbare Messwerte ermittelt werden.

Die WO 01/32397 A1 (TECHNOPLAST KUNSTSTOFFTECHNIK), 10. Mai 2001, offenbart ein Online Rheometer, bei welchem ein Schmelzestrom abgezweigt wird. Nachteilig ist der permanente Materialverlust, sodass dieses System für eine laufende Produktionsüberwachung nicht geeignet ist.

Die US 4,213,747 (FRIEDRICH REINHARD), 22. Juli 1980, offenbart ein Verfahren und eine Vorrichtung zur Überwachung der Viskosität einer Kunststoffschmelze mit einer Abzweigung und Förderung der Schmelze zur Messvorrichtung mittels Zahnradpumpe. Nachteilig ist die Förderung des Schmelzestroms zur Messeinrichtung mit einer Zahnradpumpe, weshalb im Falle der PVC-Extrusions unbrauchbare Messwerte ermittelt werden.

Die WO 00/10794 (GREINER EXTRUSIONSTECHNIK; LANGECKER Günter), 2. März 2000, offenbart ein Verfahren und eine Anlage zur Herstellung länglicher Gegenstände aus Kunststoff mit einer integrierten Messeinrichtung zur Regelung des Geliergrades bzw. MFI/MVI-Index der Schmelze. Bedingt durch die Tatsache, dass die Bestimmung des MFI/MVI-Index der Kunststoffschmelze grundsätzlich mittels einer genormten Apparatur unter standardisierten Bedingungen (z.B. DIN 53735) erfolgt, die in einer Produktionsanlage nicht vorkommen bzw. eingehalten werden können, ist der unter Produktionsbedingungen erhalten Wert nicht ohne weiteres auf den unter Normbedingungen erhaltenen Wert übertragbar. Des Weiteren liefert ein MFI/MVI-Index ohnehin nur einen einzigen Wert auf der Viskositätskurve, der zudem weit außerhalb des für die Profilextrusion technisch möglichen Wertebereiches liegt (z.B. Schergeschwindigkeit MFI-Bestimmung ca. 10 [1/s]; Schergeschwindigkeitsbereich Extrusion ca. $10^2$ bis $10^3$ [1/s]) ist der hier vorgeschlagene Messwert in weiterer Folge als Regelparameter völlig ungeeignet. Weiters kommen für die Verarbeitung von PVC zu Profilen mit hohem Anspruch an die Qualität ausschließlich Doppelschneckenextruder ohne zusätzlicher Fördereinrichtungen wie z.B. Zahnradpumpen zum Einsatz, sodass das hier in allgemeiner Weise dargestellte Verfahren nicht ohne weiteres auf die Profilextrusion übertragbar und anwendbar ist. Bedingt durch die Beeinflussbarkeit der rheologischen Eigenschaften einer Kunststoffschmelze aus PVC durch die "Schervorgeschichte" und die Temperatur, erscheint die Anwendbarkeit auf Polyolevine beschränkt und auf PVC nicht übertragbar.

Die DE 197 15 630 (MICHAELI WALTER), 22. Oktober 1998, offenbart eine Vorrichtung und ein Verfahren zur Bestimmung rheologischer Werkstoffdaten von Polymeren, wobei ein als Messstrecke ausgebildeter Fließkanal an einen Extruder angekoppelt wird. Die Stoffdaten werden aufgrund der relativ kurzen Messstrecke bei sehr kleinen Druckdifferenzen gemessen, weshalb größere Unsicherheiten auftreten.

Die EP 0 238 796 (WERNER & PFLEIDERER), 30. September 1987, offenbart eine Vorrichtung und ein Verfahren zur Herstellung eines Kunststoffes mit definierten Eigenschaften, basierend auf dem Prinzip eines Seitenstromrheometers. Nachteilig ist der permanente Materialverlust während der Produktion.

Die US 6,463,810 B1 (INSTITUTE OF NUCLEAER ENERGY RESEARCH), 7. Februar 2000, offenbart eine Messapparatur zur Bestimmung von Massendurchfluss und Strömungsgeschwindigkeit in einem System für niedrige Fließgeschwindigkeiten.

Dieses System ist nicht für rheologische Messungen und vor allem nicht bei PVC-Schmelzen anwendbar.

Die DD 216 897 A1 offenbart eine Extrusionsanlage mit integrierten Sensoren zur Erfassung des sogenannten morphologischen Zustands der verarbeiteten plastischen Masse, einer Signalverarbeitungseinheit/Rechenanlage zur Umwandlung in Sollgrößen für Prozessparameter. Zwar bezieht sich die Erfindung auch auf die Verarbeitung von Polyvinylchlorid und den Einsatz eines kontinuierlich arbeitenden Viskosimeters, es bleibt jedoch unberücksichtigt, dass im Falle von PVC die Fließeigenschaften nicht mit einem einzigen Viskositätswert beschrieben werden können sondern nur mit einer mehrparametrigen Viskositätsfunktion.

Die DE 37 13 400 A1 offenbart ein Verfahren und eine Vorrichtung zum Steuern von Strangpressenreihen unter Anwendung eines Mikroprozessors. Dabei wird das Strangpressenverfahren unter Berücksichtigung der gegenseitigen Beziehungen zwischen den gemessenen und geregelten Parametern des Strangpressenverfahrens (Zylindertemperaturen, Werkzeugtemperaturen, Schneckendrehzahl, Abziehgeschwindigkeit) sowie zwischen den gemessenen Parametern (Kopfdruck, Stofftemperatur) und zwischen deren errechneten Parametern (Schergeschwindigkeit, Viskosität, erster Normalspannungsunterschied, Werkzeugwiderstand, Massenstrom, kritische Schergeschwindigkeit, Anschwellen, charakteristische Dimension) gesteuert.

Bedingt durch die Tatsache, dass ausschließlich an einer einzigen Stelle der Massedruck der Kunststoffschmelze gemessen wird, und zwar als Messung des Kopfdruckes ist im Falle einer Kunststoffschmelze aus PVC, welche ein strukturviskoses rheologisches Verhalten zeigt, die Bestimmung der Viskosität nicht möglich. Eine strukturviskose Schmelze hat eine von mehreren Parametern (Scherenergie, Temperatur, Druck sowie bei PVC der "Schervorgeschichte") abhängige Viskositätsfunktion und kann nicht durch einen einzigen Viskositätswert ($\eta$) beschrieben werden.

Die DE 1 454 787 A offenbart ein "Verfahren zum Konstanthalten der auf die Zeiteinheit bezogenen Durchflussmenge eines Werkstoffes". Bei der offenbarten Erfindung ist die Zielsetzung, die Durchflussmenge konstant zu halten, wobei auf die rheologischen Eigenschaften der Kunststoffschmelze nicht eingegangen wird (diese werden auch nicht überwacht). Zur Konstanthaltung der Durchflussmenge werden im Wesentlichen zwei hintereinander befindliche Extruder verwendet, wobei der zweite Extruder mit einer Dosierschnecke ausgerüstet ist und eine Dosierfunktion aufweist. Als Messsignale werden jeweils ausschließlich nach dem Extruder mittels Drucksensoren Drücke in der Schmelze gemessen und verarbeitet.

Aufgabe der gegenständlichen Erfindung ist es, mit Hilfe eines einfach anwendbaren Verfahrens und den zugehörigen Einrichtungen die gleichmäßige Qualität von im Extrusionsprozess hergestellten Profilstangen mit komplexer Profilgeometrie zu gewährleisten, selbst dann, wenn unvermeidbare und übliche Schwankungen im Rohmaterial oder Maschinen bedingte Schwankungen in den Prozessparametern auftreten. Das Verfahren muss auf den am häufigsten verwendeten Werkstoff - PVC - anwendbar sein und die unter Produktionsbedingungen auftretende Scherenergie, Schervorgeschichte und Massetemperatur berücksichtigen.

Erfindungsgemäß wird diese Aufgabe dadurch gelöst, dass an mindestens zwei in Fließrichtung der Kunststoffschmelze beabstandeten Messstellen jeweils ein Regelparameter berechnet wird, der sich aus einer vorbestimmten Funktion ergibt, die vom lokalen Druck der Schmelze und einem die Fliessgeschwindigkeit der Schmelze in der Extrusionswerkzeugdüse repräsentierenden Parameter abhängt.

Wesentlich ist, dass während der laufenden Produktion die Temperatur der Kunststoffschmelze, der Druckabbau im Schmelzestrom vom Austritt der Schmelze aus dem Extruder bis zum Ende der Extrusionsdüse und die Austrittsgeschwindigkeit der Kunststoffschmelze aus der Werkzeugdüse gemessen, zu einem aussagefähigen Kennwert verarbeitet, als Prozessparameter statistisch ausgewertet und im Sinne einer statistischen Prozesskontrolle und -überwachung zur automatisierten Regelung der Produktionsanlage weiterverarbeitet wird.

Die Erfindung weist explizit auf die Anordnung von Sensoren im Massestrom vor dem Extrusionswerkzeug und nach der Ausformung der Masse in der Werkzeugdüse hin. Dies hat zur Folge, dass die Viskosität der Schmelze also ausschließlich im Schmelzestrom im Extruder der nach vollständiger Plastifizierung, also nach Verlassen des Plastifiziervolumens der Schnecke und vor dem Eintritt in das Extrusionswerkzeug an nur einer einzigen Stelle gemessen wird, da ja im ausgeformten Profil nach Verlassen des Extrusionswerkzeuges keine Kunststoffschmelze im engeren Sinn mehr vorliegt, die einer Viskositätsbestimmung zugänglich ist. Bekanntermaßen stellt eine PVC-Schmelze ein sogenanntes strukturviskoses Fluid dar, was zur Folge hat, dass die PVC-Schmelze eine von der Schergeschwindigkeit, Temperatur und zusätzlich noch von der "Schervorgeschichte" abhängige Viskositätsfunktion aufweist. Eine PVC-Schmelze kann nicht mit einem einzigen "Viskositätswert" beschrieben werden.

Bekannte Lösungen unterscheiden sich von der gegenständlichen Erfindung im Wesentlichen dadurch, dass mit solchen Anordnungen von Messsensoren nur ein einziger Wert einer nichtlinearen, von mehreren Paramteren abhängigen Viskositätsfunktion gemessen werden kann. Mit nur einem einzigen Viskositätswert einer "unbekannten" Viskositätsfunktion kann keine Strategie für eine Prozessüberwachung und -regelung abgeleitet werden. Im Unterschied dazu bezieht sich die gegenständliche Erfindung auf die implizite, aber zuverlässige Erfassung der Viskositätsfunktion über den für den Extrusionsprozess maßgeblichen gesamten Schergeschwindigkeitsbereich. Zur Erklärung dazu sei angeführt, dass in einer Extrusionswerkzeugdüse der Schergeschwindigkeitsbereich der fließenden Kunststoffschmelze entlang des "Strömungskanals" von ca. $10^2$ 1/sec (Eintritt der Schmelze in die Werkzeugdüse) bis ca. $10^3$ 1/sec (Austritt der Schmelze aus der Werkzeugdüse), also dort wo der Massedruck bereits vollständig abgebaut ist, beträgt.

Für Kunststoffschmelzen mit strukturviskosem Fliess-Verhalten liefern Messsensoren zur Charakterisierung der Schmelzeeigenschaft, die nur einen einzigen Schergeschwindigkeitszustand verarbeiten, keine brauchbaren Ergebnisse.

Der gegenständlichen Erfindung liegt die indirekte Erfassung der Viskositätsfunktion über den gesamten Schergeschwindigkeitsbereich für jeweils beliebige Prozesseinstellungen zugrunde.

Die DE 37 13 400 A1 nimmt auf den Werkstoff PVC Bezug; das Verfahren liefert jedoch keine verwertbaren zusätzlichen Parameter zur Regelung des Strangpressenprozesses zur Herstellung von PVC-Profilen, als es mit den bis heute üblichen und dem Stand der Technik entsprechenden Temperatur- und Massedrucksensoren nicht ohnehin möglich ist.

Bei der gegenständlichen Erfindung steht die Messung der Schmelzeeigenschaften und deren Beeinflussung zur Konstanthaltung der Profilqualität im Vordergrund. Mittels der Konstanthaltung der Durchflussmenge (wie in der DE 1 454 787 A beschrieben) ist das Problem der Gleichmäßigkeit der Profileigenschaften für die meisten thermoplastischen Kunststoffschmelzen (inkl. PVC) nicht lösbar. Somit berührt die offenbarte Lösung in keiner Weise die gegenständliche Erfindung.

Die für den Extrusionsprozess wesentlichen Parameter sind die Schneckendrehzahl, der Schneckenfüllgrad (mittels der Dosierung beeinflussbar über die Dosierschneckendrehzahl), die zur Plastifizierung erforderliche Plastifizierenergie (gebildet aus Schneckendrehzahl und Schneckendrehmoment), der in den Extruderzylinder und in die Extruderschnecken eingebrachten thermische Energie, der Druckverbrauch im Extrusionswerkzeug (gemessen als Massedruck im Adapter zwischen Extruderflansch und Werkzeugflansch, die Temperatur der Kunststoffschmelze (Massetemperatur, gemessen im Adapter zwischen Extruderflansch und Werkzeugflansch), die Werkzeugtemperierung und die Extrusionsgeschwindigkeit bzw. die Ausstoßleistung an Extrudat aus dem Werkzeug. Diese Parameter werden in konventioneller Weise gemessen und in geeigneter Weise angezeigt. Die Qualität der im Extrusionsprozess hergestellten Profilstangen wird extern mittels geometrischer Messeinrichtungen und optischer, chemischer sowie physikalischer Prüfmethoden beurteilt. Dem Stand der Technik entsprechend werden bei Abweichungen, die zu einer Beeinträchtigung der Qualität bzw. zur Nichtverwendbarkeit führen würden, manuelle Anpassungen der Parameter vorgenommen. Dies hat den Nachteil zur Folge, dass zwischen dem Zeitpunkt des Eintretens einer Abweichung und dem Erkennen der Abweichungen zum Teil enorme Zeitspannen liegen, und bis zum Wirksamwerden einer Korrektur entsprechend viel Ausschuss produziert werden kann. Mit den im Produktionsprozess überwachten Parametern allein ist eine Regelung der Anlage nach Kriterien der Qualität des hergestellten Profils nicht möglich. Um dies zu ermöglichen, wird ein neuer Parameter definiert, eine sogenannte Extrusionszahl "EZ", mit der die rheologischen Eigenschaften einer Kunststoffschmelze für ein definiertes Kunststoffmaterial unter definierten Produktionsbedingungen auf einem Extruder mit einem definierten Extrusionswerkzeug auf einfache Art und Weise beschrieben werden können und in weiterer Folge als Regelparameter zur automatisierten Regelung der Extrusionsanlage verwendet werden kann.

Dieser neue Parameter, als Extrusionszahl EZ bezeichnet, beschreibt indirekt eine Viskositätsfunktion der Kunststoffschmelze unter Produktionsbedingungen. Im klassischen Sinne werden die rheologischen Eigenschaften einer Kunststoffschmelze mittels einer Viskositätsfunktion beschrieben, der zumeist ein vereinfachtes Modellgesetz zugrundegelegt ist. Exemplarisch sei die Viskositätsfunktion nach dem Carreau-Modell erwähnt. Die exakte Bestimmung einer "absoluten" Viskositätsfunktion mit geeigneten Messapparaten unter Produktionsbedingungen gestaltet sich aufwändig und stellt nur eine Momentaufnahme dar. Aus diesem Grund wird auf die Ermittlung einer "absoluten" Viskositätsfunktion im klassischen Sinn verzichtet, zugunsten einer den Prozess tatsächlich beschreibenden "Hilfsfunktion". Eine Viskositätsfunktion beschreibt den Zusammenhang der Viskosität einer Schmelze mit der Schergeschwindigkeit bezogen auf eine bestimmte (Schmelze-) Temperatur.

$$\eta(T_M) = f\left(\dot{\gamma}\right) \quad [Pa \cdot s] \tag{1}$$

$$EZ(T, v_A) = \sum_{i=1}^{n}\left( p_i \cdot \bar{v}_i \right) \quad [bar \bullet m / \min] \tag{2}$$

$$\bar{v}_i = \frac{\dot{V}}{A_i} \quad [m/\min] \tag{3}$$

$$\dot{V} = A \cdot v_A \quad [m^3/\min] \tag{4}$$

$\eta(T_M)$     *Viskosität* $[Pa \cdot s]$

$\dot{\gamma}$     *Schergeschwindigkeit* $[1/s]$

$T_M$     *Masse-(Schmelze-) Temperatur* $[^{\circ}C]$

$v_A$     *Abzugsgeschwindigkeit* $[m/\min]$

$p_i$      *lokaler Massedruck (Schmelzedruck) [bar]*
$\bar{v}_i$      *mittlere lokale Schmelzeströmungsgeschwindigkeit* [*m*/min]
$\dot{V}$      *Volumenstrom (Aussto*β*)* [*m*³/min]
$A_i$      *lokaler Strömungsquerschnitt im Werkzeug* [*m*²]

Damit ist die Extrusionszahl EZ für ein definiertes Extrusionswerkzeug und eine definierte Extrusionsanlage nur noch eine Funktion der Massetemperatur $T_M$ und der Abzugsgeschwindigkeit $v_A$.

Der Druckverbrauch des Extrusionswerkzeuges wird mittels konventioneller Drucksensoren gemessen, wobei mindestens ein Drucksensor im System (Adapter) erforderlich ist. In einer bevorzugten Ausführungsvariante werden mit mindestens einem zusätzlichen Drucksensor im Strömungskanal des Extrusionswerkzeuges zusätzliche Druckniveaus gemessen, die zu einer genaueren Bestimmung des Druckverbrauches und der Zuordnung zur jeweiligen Position in der Extrusionswerkzeugdüse herangezogen werden können. Der Volumenstrom $\dot{V}$ in der Extrusionswerkzeugdüse wird aus dem Austrittsquerschnitt und der Abzugsgeschwindigkeit $v_A$ (= Austrittsgeschwindigkeit des Extrudates aus der Extrusionswerkzeugdüse) berechnet.

Die Funktionsweise des erfinderischen Verfahrens und der erforderlichen Einrichtungen zur automatisierten Regelung des Extrusionsprozesses ist wie folgt. Zu Beginn einer Produktion mit einem neuen Extrusionswerkzeug wird eine "Masterkurve" ermittelt und abgespeichert. Dazu wird unter Produktionsbedingungen die Extrusionszahl EZ bestimmt, als Funktion der Massetemperatur und der Abzugsgeschwindigkeit. Zu jeder definierten Einstellung wird die Profilqualität erfasst und Grenzwerte festgelegt, innerhalb der die Profilqualität den Anforderungen noch entspricht und ein Produktionszielwert als "Mittelwert" festgelegt. Der Regelalgorithmus versucht diesen Mittelwert als Zielwert zu erreichen und zu halten. Abweichungen vom Zielwert werden mittels einer Trendanalyse nach statistischen Methoden analysiert. Solange die ermittelte Extrusionszahl innerhalb der vorgewählten Grenzwerte liegt, erfolgt keine Aktion. Erst wenn sogenannte Warngrenzen erreicht werden, wird eine Warnmeldung bzw. ein Warnsignal ausgegeben, bzw. wenn eine Eingriffsgrenze erreicht wird erfolgt eine Information für eine durchzuführende Änderung eines oder mehrerer Produktionsparameter(s) (z. B. Massetemperatur erhöhen, Schneckendrehzahl verringern, Abzugsgeschwindigkeit erhöhen)

Die Erfindung wird anhand der nachstehenden Figuren näher erläutert. Die Figuren zeigen:

Fig. 1      schematisch eine Extrusionsanlage in einer axonometrischen Darstellung;

Fig. 2      schematisch eine Extrusionsanlage in einer seitlichen Darstellung;

Fig. 3      ein Diagramm, das eine typische Extrusionskurve darstellt;

Fig. 4      Ausführungsvarianten in Darstellungen entsprechend Fig. 2;

Fig. 5      Ausführungsvarianten in Darstellungen entsprechend Fig. 2;

Fig. 6      weitere Diagramme zur Erklärung der Erfindung; und

Fig. 7      weitere Diagramme zur Erklärung der Erfindung.

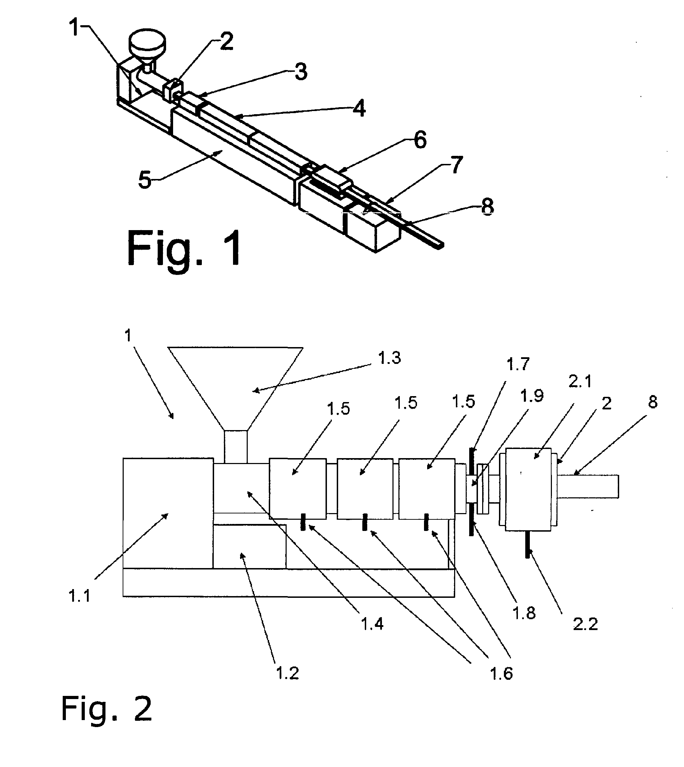

Fig. 1 zeigt eine Extrusionsanlage, bestehend aus dem Extruder 1, der Extrusionswerkzeugdüse 2, dem Trockenkalibrierwerkzeug 3, der Wasserbad- oder Vakuumtankkalibrierung 4, dem Vakuumkalibriertisch 5, dem Profilraupenabzug 6, der Ablängevorrichtung 7 und das produzierte Profil 8.

Fig. 2 zeigt den verfahrenstechnisch wichtigsten Teil einer Extrusionsanlage bestehend aus dem Extruder 1 mit dem Getriebe 1.1, dem Antriebsmotor 1.2, der Materialzufuhr (Trichter) 1.3, dem Extruderzylinder (mit nicht weiter dargestellten Extruderschnecken) 1.4, den Heizeinrichtungen (ausgeführt als Heiz- und Kühlkörper) 1.5, den Temperatursensoren 1.6 zur Bestimmung der Extruderzylindertemperatur, dem Temperatursensor 1.7 zur Bestimmung der Massetemperatur der Schmelze im Adapter 1.9, dem Drucksensor 1.8 zur Bestimmung des Schmelzedruckes im Adapter 1.9 und der Extrusionswerkzeugdüse 2, mit den Heizeinrichtungen 2.1 und den Temperatursensoren 2.2 zur Ermittlung der Extrusionswerkzeugtemperatur.

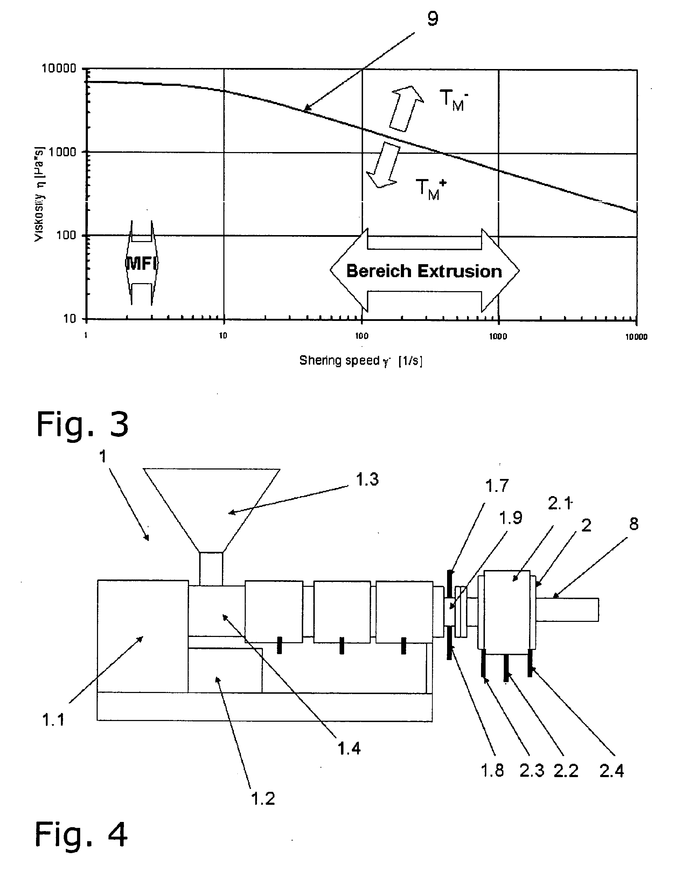

Fig. 3 zeigt eine typische Viskositätskurve 9 für PVC-Schmelzen und den Bereich der Extrusion im Schergeschwindigkeitsbereich von ca. $10^2$ bis $10^3$ [1/s] sowie den Schergeschwindigkeitsbereich zur Bestimmung des MFI-Wertes. Durch Änderung der Schmelze- (Masse-)Temperatur ändert sich der Viskositätsverlauf; bei Temperaturerhöhung nimmt die Viskosität ab und vice versa zu. Durch Veränderung der Scherenergieeinleitung ("Schervorgeschichte") wird zusätzlich die Neigung der Viskositätskurve beeinflusst.

Fig. 4 zeigt eine erfindungsgemäße Extrusionsanlage mit zusätzlichen Druckmesssensoren 2.3 und 2.4 im Extrusionswerkzeug 2, zur Ermittlung eines genaueren Druckverbrauches in der Extrusionswerkzeugdüse. Diese Druckmesssensoren sind an Orten vorgesehen, wo ein direkter Kontakt mit der Schmelze möglich ist, jedoch an einer Position bezogen auf das Endprodukt, wo eine untergeordnet Anforderung an die Oberflächenqualität gegeben ist (z. B. Riefenfreiheit, Glanz).

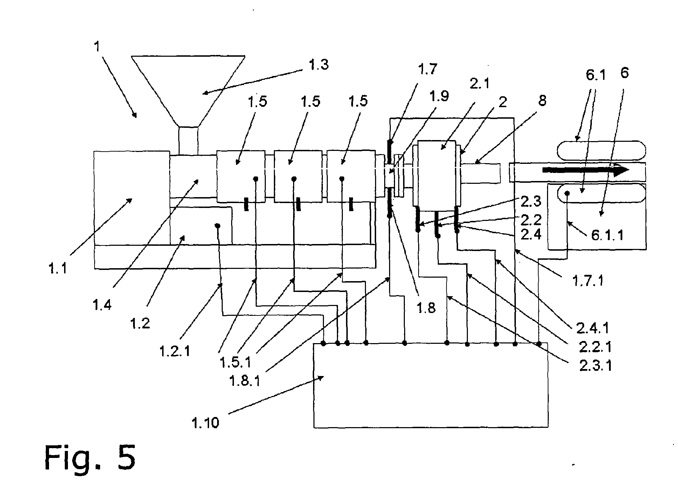

Fig. 5 zeigt die erfindungsgemäße Extrusionsanlage mit dem Regler 1.10. Erfasst werden das Motordrehmoment 1.2.1, die Zylinderheizleistung 1.5.1, die Massetemperatur 1.7.1, der Massedruck 1.8.1, die Schmelzedrücke 2.3.1 und 2.4.1 im Extrusionswerkzeug, die Werkzeugtemperaturen 2.2.1 und die Abzugsgeschwindigkeit 6.1.1 aus der Antriebseinheit 6.1 des Profilraupenabzugs 6.

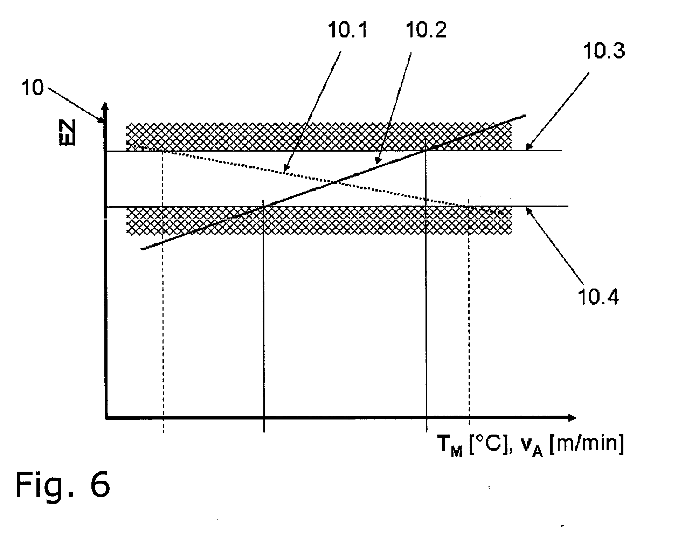

Fig. 6 zeigt eine schematische Darstellung des Verlaufs der Extrusionszahl EZ 10 als Funktion der Massetemperatur 10.1 und als Funktion der Abzugsgeschwindigkeit 10.2 sowie den oberen Grenzwert 10.3 und den unteren Grenzwert 10.4.

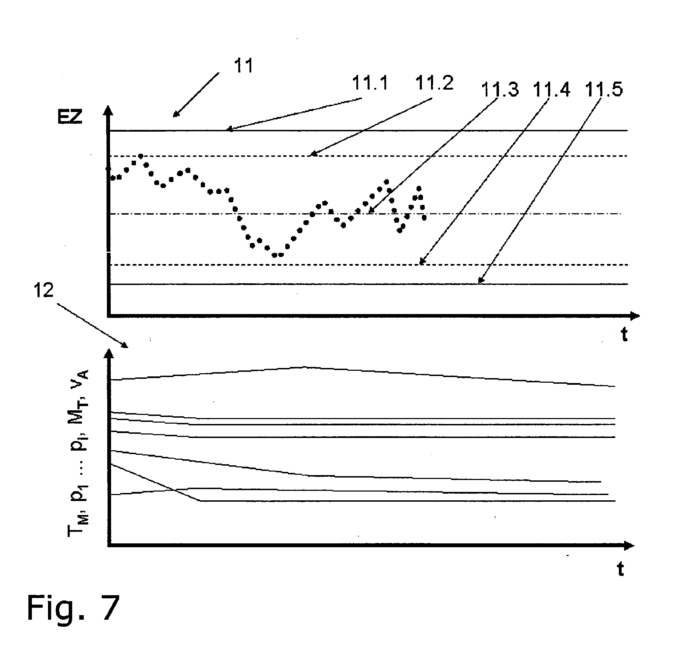

Fig. 7 zeigt schematisch eine Möglichkeit der Prozessregelung mittels Prozessregelkartentechnik 11, mit der oberen 11.1 und unteren 11.5 Eingriffsgrenze, mit der oberen 11.2 und unteren 11.4 Warngrenze und dem Zielwert 11.3 der Extrusionszahl EZ sowie schematisch den Verlauf verschiedener Prozessparameter in einem Histogramm 12.

Die vorliegende Erfindung beschreibt ein Verfahren und die dazu erforderlichen Einrichtungen zur automatisierten Prozess- und Qualitätsüberwachung sowie einer integrierten Regelung eines Extrusionsprozesses zur Herstellung von Profilstangen aus thermoplastischem Kunststoff, vorzugsweise aus PVC.

**Patentansprüche**

1. Verfahren zur Herstellung von Profilen aus thermoplastischem Kunststoff, vorzugsweise aus PVC, bei dem Kunststoffgranulat oder -pulver in einem Extruder plastifiziert wird und durch ein Extrusionswerkzeug gepresst wird, um einen Profilstrang mit einem vorbestimmten Querschnitt herzustellen, wobei zur Sicherstellung einer gleichmäßigen Qualität des erzeugten Profils eine automatisierten Prozess- und/oder Qualitätsüberwachung durchgeführt wird, indem Messwerte über den Zustand der Kunststoffschmelze im Extruder und/oder im Extrusionswerkzeug aufgenommen und verarbeitet werden, **dadurch gekennzeichnet, dass** an mindestens zwei in Fließrichtung der Kunststoffschmelze beabstandeten Messstellen jeweils ein Regelparameter berechnet wird, der sich aus einer vorbestimmten Funktion ergibt, die vom lokalen Druck der Schmelze und einem die Fliessgeschwindigkeit der Schmelze in der Extrusionswerkzeugdüse repräsentierenden Parameter abhängt.

2. Verfahren nach Anspruch 1, **dadurch gekennzeichnet, dass** der Regelparameter als Funktion des Produkts aus lokalen Druck der Schmelze und Fliessgeschwindigkeit der Schmelze darstellbar ist.

3. Verfahren nach Anspruch 1 oder 2, **dadurch gekennzeichnet, dass** als Parameter, der die Fliessgeschwindigkeit der Schmelze in der Extrusionswerkzeugdüse repräsentiert ein Quotient aus einem aus der Schneckendrehzahl ermittelten Massenstrom und einer Querschnittsfläche an der Messstelle genommen wird.

4. Verfahren nach Anspruch 1 oder 2, **dadurch gekennzeichnet, dass** als Regelparameter, der die Fliessgeschwindigkeit der Schmelze in der Extrusionswerkzeugdüse repräsentiert, ein Quotient aus einem aus der Abzugsgeschwindigkeit ermittelten Massenstrom und einer Querschnittsfläche an der Messstelle genommen wird.

5. Verfahren nach einem der Ansprüche 1 bis 4, **dadurch gekennzeichnet, dass** an den Messstellen zusätzlich die Temperatur ermittelt wird.

6. Verfahren nach einem der Ansprüche 1 bis 5, **dadurch gekennzeichnet, dass** mindestens eine Messstelle am stromaufwärtigen Ende des Extrusionswerkzeugs angeordnet ist und dass mindestens eine weitere Messstelle am stromabwärtigen Ende des Extrusionswerkzeugs angeordnet ist.

7. Verfahren nach einem der Ansprüche 1 bis 6, **dadurch gekennzeichnet, dass** mindestens eine Messstelle unmittelbar stromabwärts der Extruderschnecke und vorzugsweise stromaufwärts eines Adapters angeordnet ist.

8. Verfahren nach einem der Ansprüche 1 bis 7, **dadurch gekennzeichnet, dass** mehrere an verschiedenen Messstellen gewonnene Regelparameter additiv zu einem Hauptregelparameter verknüpft werden, der primär zur Prozessregelung verwendet wird.

9. Verfahren nach einem der Ansprüche 1 bis 8, **dadurch gekennzeichnet, dass** zur Regelung Fuzzy-logic-Algorithmen verwendet werden.

**10.** Verfahren nach einem der Ansprüche 1 bis 9, **dadurch gekennzeichnet, dass** zur Regelung neuronale Netzwerke verwendet werden.

**11.** Vorrichtung zur Regelung einer Anlage zur Herstellung von Profilen aus thermoplastischem Kunststoff, vorzugsweise aus PVC, bei dem Kunststoffgranulat oder -pulver in einem Extruder plastifiziert wird und durch ein Extrusionswerkzeug gepresst wird, um einen Profilstrang mit einem vorbestimmten Querschnitt herzustellen, bei der Messwertgeber zur Ermittlung des Drucks in der Schmelze vorgesehen sind, um Regelparameter zu bestimmen, die zur Regelung des Extrusionsprozesses herangezogen werden, **dadurch gekennzeichnet, dass** ein Regler vorgesehen ist, der aus dem lokalen Druck der Schmelze und einem die Fliessgeschwindigkeit der Schmelze in der Extrusionswerkzeugdüse repräsentierenden Parameter an mindestens zwei in Fließrichtung der Kunststoffschmelze beabstandeten Messstellen jeweils einen Regelparameter berechnet, der sich aus einer vorbestimmten Funktion aus lokalen Druck und dem die Fliessgeschwindigkeit der Schmelze in der Extrusionswerkzeugdüse repräsentierenden Parameter ergibt.

**12.** Vorrichtung nach Anspruch 11, **dadurch gekennzeichnet, dass** weiters an mindestens einer Messstelle ein Temperatursensor vorgesehen ist.

**13.** Vorrichtung nach Anspruch 11 oder 12, **dadurch gekennzeichnet, dass** mindestens eine Messstelle am stromaufwärtigen Ende des Extrusionswerkzeugs angeordnet ist und dass mindestens eine weitere Messstelle am stromabwärtigen Ende des Extrusionswerkzeugs angeordnet ist.

**14.** Vorrichtung nach einem der Ansprüche 11 bis 13, **dadurch gekennzeichnet, dass** mindestens eine Messstelle unmittelbar stromabwärts der Extruderschnecke und vorzugsweise stromaufwärts eines Adapters angeordnet ist.

**15.** Vorrichtung nach einem der Ansprüche 11 bis 14, **dadurch gekennzeichnet, dass** der Regler mehrere an verschiedenen Messstellen gewonnene Regelparameter additiv zu einem Hauptregelparameter verknüpft, der primär zur Prozessregelung verwendet wird.

# Fig. 1

# Fig. 2

Fig. 3

Fig. 4

Fig. 5

Fig. 6

Fig. 7